Europäisches Patentamt

European Patent Office

Office européen des brevets

(19)

(11) Veröffentlichungsnummer: **0 041 943**
A2

(12) **EUROPÄISCHE PATENTANMELDUNG**

(21) Anmeldenummer: 81890097.9

(22) Anmeldetag: 11.06.81

(51) Int. Cl.³: **F 24 J 3/02**

(30) Priorität: 11.06.80 AT 3058/80

(43) Veröffentlichungstag der Anmeldung:
16.12.81 Patentblatt 81/50

(84) Benannte Vertragsstaaten:
BE CH DE FR GB IT LI LU NL SE

(71) Anmelder: Ledinek-Matzer, Johann
Rauden 80
A-8081 Heiligenkreuz a.W.(AT)

(72) Erfinder: Ledinek-Matzer, Johann
Rauden 80
A-8081 Heiligenkreuz a.W.(AT)

(74) Vertreter: Casati, Wilhelm, Dipl.-Ing. et al,
Krause Dipl.-Ing. Ernst Casati Dipl.-Ing. Wilhelm
Amerlingstrasse 8
A-1061 Wien VI(AT)

(54) Solaranlage.

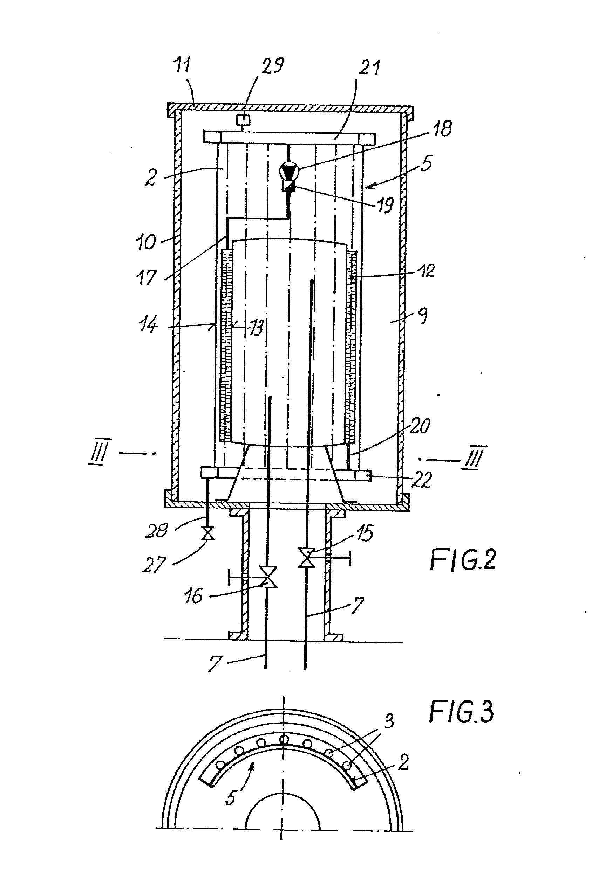

(57) Die Erfindung betrifft eine Solaranlage, deren Kollektor
(1) als Flächenkollektor ausgebildet ist, bei dem Rohre (3) mit
einem Absorberblech (2) verbunden sind. Im Gegensatz zu
den bisherigen ebenen Flächenkollektoren bildet das Absorberblech (2) jedoch eine Kegel- bzw. Zylinderfläche (4 bzw 5),
wodurch die Hälfte der Absorberfläche von Sonnenaufgang
bis Sonnenuntergang im Winkel von 90° bestrahlt ist. Die
erfindungsgemäße Anlage kann zur Gänze vorgefertigt werden und bedarf am Aufstellungsort nur mehr des Anschlusses
an die Wasser- und gegebenenfalls an die elektrische Energieversorgung (Fig.2).

FIG.2

EP 0 041 943 A2

## Solaranlage

Die Erfindung betrifft eine Solaranlage, deren Kollektor als aus einem Absorber-Blech und damit verbundenen Rohren bestehender Flächenkollektor ausgebildet ist.

Bei Anlagen der vorgenannten Art wurde es bekannt (FR-PS 1 345 849), Flächenkollektoren in Gestalt von Plattenkollektoren, somit ebene Gebilde einzusetzen. Derartige Plattenkollektoren weisen, wenn sie in Solaranlagen eingesetzt werden, den Nachteil auf, daß sie lediglich über eine relativ kurze Zeitspanne der Sonneneinstrahlung optimal ausgesetzt sind.

Aus der FR-PS 22 80 036 wurde ein Reflektorkegel bekannt, der im Abstand von seiner reflektierenden Mantelfläche mit nach Art einer konischen Schraubenlinie angeordneten Heizrohren umgeben ist. Die reflektierende Mantelfläche soll hiebei die reflektierten Strahlen auf die Heizrohre werfen. Die einzelnen Windungen der Heizrohre stehen untereinander nicht in Verbindung, vielmehr befindet sich zwischen den einzelnen Windungen der Heizrohre Luft, wobei die Sonnenstrahlen frei durch den Zwischenraum hindurch auf die reflektierende Kegelmantelfläche fallen und viele der reflektierten Strahlen die Heizrohre gar nicht erreichen, zu deren Erwärmung damit keinen Beitrag leisten.

Der Erfindung liegt die Aufgabe zugrunde, eine Solaranlage der eingangs genannten Art so auszubilden, daß der Kollektor unabhängig vom von der Tageszeit abhängigen Sonnenstand, eine möglichst große Fläche der Sonnenstrahlung darbietet. Erreicht wird dies, wenn bei einer Solaranlage der eingangs erwähnten Gattung, gemäß der Erfindung das Absorber-Blech des Flächenkollektors eine Kegel- bzw. Zylinderfläche bildet. Durch diese Ausgestaltung wird erreicht, daß immer ein Bereich von $120^\circ$ von Sonnenauf- bis Sonnenuntergang im Winkel von $90^\circ$ durch die Sonne bestrahlt wird. Erfindungsgemäß gestaltete Solaranlagen können demgemäß auf einem Grundstück oder auf dem Dach, insbes. Flachdach eines Hauses, montiert werden und sind hinsichtlich ihrer Wirksamkeit unabhängig von der Ausrichtung des Hauses.

In Weiterbildung der Erfindung ist bei einer Solaranlage der eingangs erwähnten Art deren Sonnenkollektor gemeinsam mit einem mit Kaltwasserzulauf und Warmwasserabzug versehenen Speicherbehälter ausgebildet, erfindungsgemäß in dem Innenraum, der von der vom Blech des Flächenkollektors gebildeten Kegel- bzw. Zylinderfläche umschlossen ist, der insbes. als Doppelmantelboiler ausgebildete Speicherbehälter angeordnet. Der Raum zwischen den beiden Mänteln des Boilers wird hiebei von dem im Sonnenkollektor erwärmten Medium beaufschlagt und damit aufgeheizt, so daß im Inneren des Boilers befindliches Medium, insbes. Wasser, erhitzt wird und zu Gebrauchszwecken zur Verfügung steht. Durch diese Ausgestaltung wird eine kompakte Einheit aus Absorber und Boiler geschaffen, wobei der zur Verfügung stehende Raum optimal genutzt wird.

In Weiterbildung der Erfindung erstreckt sich der Kegel bzw. Zylinderfläche über einen Winkelbereich von 120$^\circ$. Dadurch wird gegenüber einer Anlage, bei der der Kollektor sich über einen Winkel von nahezu 360$^\circ$ oder 360$^\circ$ erstreckt, erreicht, daß kein Flächenstück vorhanden ist, das nicht beschienen ist.

Es besteht auch die Möglichkeit, die gesamte Kollektorfläche in Abschnitte zu unterteilen und diese Abschnitte parallel zu schalten und ihr Zu- und Abschalten in den Gesamtkreis durch Ventile zu steuern.

Eine besonders einfache Erzeugung der Flächenkollektoren ergibt sich, wenn die Rohre aus dem Absorberblech ausgeformt werden. Die Rohre bestehen hiebei mit dem Absorberblech aus einem Stück. Bei der Herstellung bildet der Rohrmantel eine entlang einer Erzeugenden offene Zylinderfläche. Dieser Schlitz wird nach der Ausformung der Rohre aus der Tafel abgedichtet, bevorzugt durch Verlöten.

Die Erfindung wird nachstehend anhand von Ausführungsbeispielen näher erläutert. Es zeigen:

Fig. 1 einen Längsschnitt durch eine erste Ausführungsform des Erfindungsgegenstandes,

Fig. 2 einen Längsschnitt durch eine zweite Ausführungsform des Erfindungsgegenstandes,

Fig. 3 einen Schnitt entlang der Linie III-III in Fig. 1 bzw. Fig. 2,

Fig. 4 einen Längsschnitt durch eine weitere Ausführungsform des Erfindungsgegenstandes, und

Fig. 5, ebenfalls im Längsschnitt, eine gegenüber Fig. 4 modifizierte Ausführungsvariante des Erfindungsgegenstandes.

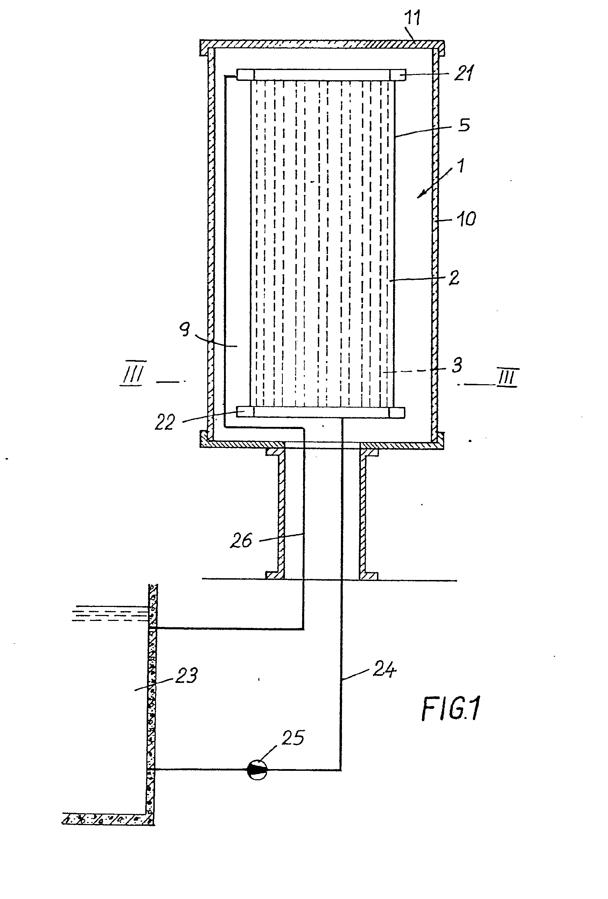

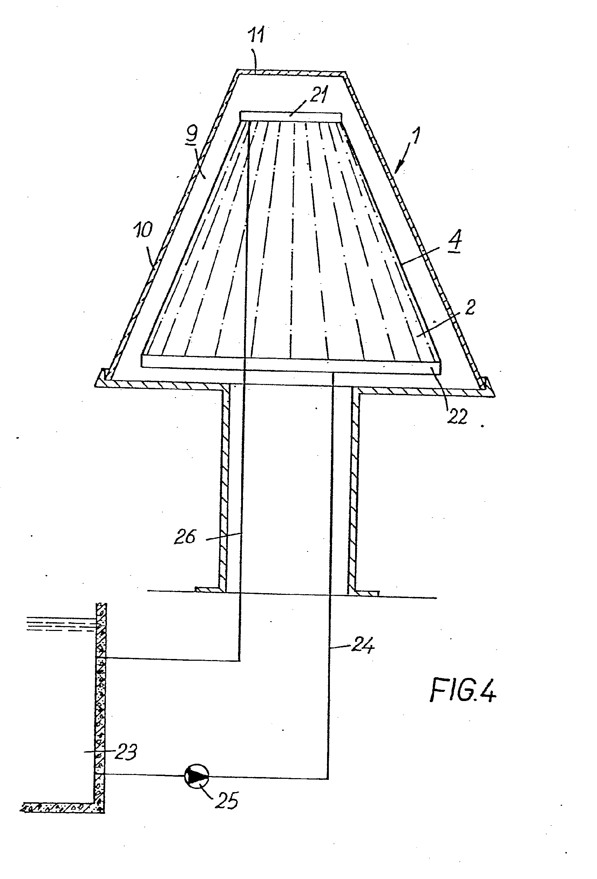

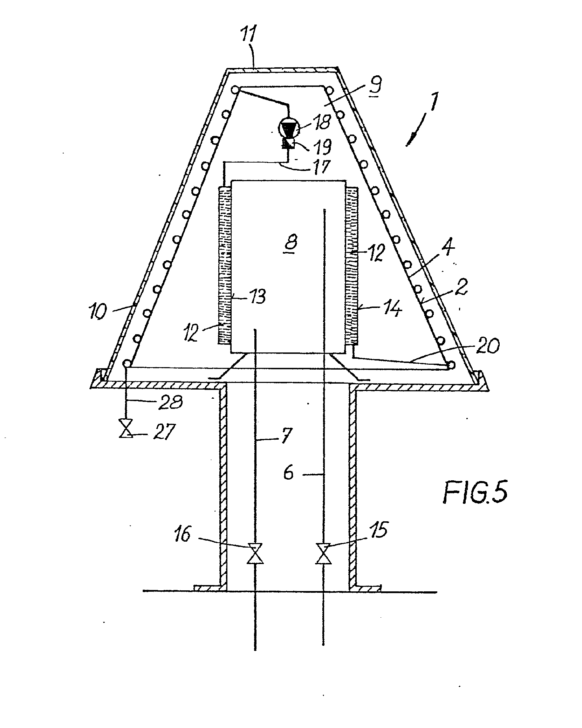

Der Kollektor 1 der erfindungsgemäßen Solaranlage ist als aus einem Absorber-Blech 2 und damit verbundenen Rohren 3 bestehender Flächenkollektor ausgebildet. Das Absorber-Blech 2 des Flächenkollektors bildet eine Kegelfläche 4 (Fig. 4, 5) bzw. eine Zylinderfläche 5 (Fig. 1, 2).

Der Kollektor 1 ist in einem Gehäuse angeordnet, dessen Mantelfläche 10 und gegebenenfalls auch dessen Deckfläche 11 aus für Sonnenstrahlen durchlässigen Material, z.B. Glas, Kunstglas (Acrylglas) bestehen. Unter der Deckfläche 11 kann in einer Ebene parallel zur Deckfläche eine weitere Kollektorfläche angeordnet sein.

In dem Innenraum 9, der von der vom Blech 2 des Flächenkollektors gebildeten Kegel- bzw. Zylinderfläche 4 bzw. 5 umschlossen ist, ist ein Speicherbehälter 8 angeordnet, der als Doppelmantelboiler ausgebildet ist (Fig. 3 und 5). Der Raum 12 zwischen den beiden Mänteln 13, 14 des Speicherbehälters 8 wird hiebei von dem im Sonnenkollektor 1 erwärmten Medium beaufschlagt und damit aufgeheizt. Das im Innern des Speicherbehälters 8 befindliche Medium (Wasser) wird solcherart durch das im Raum 12 befindliche Medium erhitzt und steht für Gebrauchszwecke zur Verfügung. In den Speicherbehälter 8 mündet ein Kaltwasserzulauf 6 und ein Warmwasserabzug 7. In den Kaltwasserzulauf 6 ist ein Absperrorgan 15 und in den Warmwasserabzug 7 ein Absperrorgan 16 eingebaut. Die Versorgung des Raumes 12 zwischen den beiden Mänteln 13 und 14 des Speicherbehälters 8 mit Medium aus dem Sonnenkollektor 1 erfolgt über eine Leitung 17, in die eine Pumpe 18 und ein Rückschlagventil 19 eingebaut ist. Die Rückfuhr des Mediums aus dem Raum 12 in den Kollektor 1 zwecks neuerlicher Aufheizung erfolgt über eine Leitung 20. Die Kegel- bzw. Zylinderfläche 4 bzw. 5 erstreckt sich vorzugsweise über einen Winkelbereich von 120°. Für die Zylinderfläche 5 ist dies in Fig. 3 dargestellt. Es ist jedoch auch möglich, daß sich das Blech 2 und damit die Kegel- bzw. Zylinderfläche 4 bzw. 5 über einen Winkelbereich von 360° erstrecken.

Der Innenraum 9 kann mit Isoliermaterial gefüllt sein, doch muss der Raum zwischen dem Absorberblech 2 und der Mantelfläche 10 hiebei von Isoliermaterial frei gehalten werden, damit die Sonnenstrahlen auf die Rohre 3 und das Blech 2 auftreffen können. Die Rohre 3 können aus dem Absorberblech 2 ausgeformt sein. In diesem Fall bestehen sie aus einem Stück mit dem Absorberblech 2. Es ist jedoch auch möglich, Rohre 3 durch Löten oder Schweißen mit dem Absorberblech 2 zu verbinden. Die Rohre können zwischen zwei Sammlern 21, 22 angeordnet werden. In den Ausführungsbeispielen gemäß den Fig. 2 und 4 weisen die Sammler Rechtecksquerschnitt auf, doch können sie auch kreisförmigen Querschnitt besitzen. In den Ausführungsbeispielen gemäß den Fig. 1 bis 4 verlaufen die Rohre im wesentlichen in Richtung der Erzeugenden der Zylinder- bzw. Kegelfläche. Bei der Ausführungsform gemäß Fig. 5 verlaufen die Rohre längs konischen Schraubenlinien. Es können jedoch auch bei den Anordnungen der Fig. 1 bis 4 nach Schraubenlinien verlaufende Rohre 3 Verwendung finden, wie auch bei der Variante gemäß Fig. 5 Rohre Verwendung finden können, die entlang von Kegelerzeugenden verlaufen.

Während bei der Ausführung gemäß den Fig.. 2 und 5 die erfindungsgemäße Anlage zur Bereitung von warmem Brauchwasser verwendet wird, ist bei der Ausführung nach den Fig. 1 und 4 eine Verwendung zur Erwärmung des Wassers in einem (Schwimm)-Becken 23 vorgesehen. In die zum unteren Sammler 22 führende Leitung 24 ist eine Pumpe 25 eingebaut. Das Warmwasser wird vom oberen Sammler 21 über eine Leitung 26 dem Becken 23 zugeführt.

Zum Befüllen des Absorbers ist eine durch ein Absperrorgan 27 verschließbare Leitung 28 vorgesehen. In dem oberen Sammler 21 ist ein Sicherheitsventil 29 eingebaut. Zur Druck- und Temperaturüberwachung können in die Anlage Thermometer und Manometer in nicht gesondert dargestellter Weise eingebaut sein. Diese Geräte können auch als Geber zur automatischen Druck- bzw. Temperatursteuerung vorgesehen werden, hiebei kann abhängig von der Temperatur die Pumpe 18 bzw. 25 gesteuert werden, d.h. in und außer Betrieb genommen werden.

Das in der erfindungsgemäßen Anlage erwärmte Medium kann außer zur Brauchwasserbereitung und zur Beheizung von Schwimmbädern auch für Fußbodenheizung, weiters in Trockenanlagen mit Heißluftgebläsen sowie in Luft/Wasser- bzw. Wasser/Wasser-Wärmepumpen Verwendung finden. In diesen Fällen kann dann die Anordnung des Speicherbehälters 8 entfallen.

Die Anschaffungs- und Montagekosten der erfindungsgemäßen Anlage sind gering. Im Winter tritt keine Gefahr wegen Schneeablagerung auf.

Als Material für den Absorber (Absorberblech 2 und Rohre 3) kann Stahl, Cr-Ni-Stahl, Kupfer, Aluminium oder verzinktes Eisenblech verwendet werden. Die Rohre 3 können auch aus PVC bestehen und auf das Absorberblech 2 aufgeklipst sein.

Die erfindungsgemäße Anlage kann auch ohne Pumpen 18 bzw. 25 nach dem Thermosiphonprinzip arbeiten.

## Patentansprüche:

1. Solaranlage, deren Kollektor (1) als aus einem Absorber-Blech (2) und damit verbundenen Rohren (3) bestehender Flächenkollektor ausgebildet ist, dadurch gekennzeichnet, daß das Absorber-Blech (2) des Flächenkollektors eine Kegel- bzw. Zylinderfläche (4 bzw. 5) bildet.

2. Solaranlage nach Anspruch 1, deren Sonnenkollektor (1) gemeinsam mit einem mit Kaltwasserzulauf (6) und Warmwasserabzug (7) versehenen Speicherbehälter (8) ausgebildet ist, dadurch gekennzeichnet, daß in dem Innenraum (9), der von der vom Blech (2) des Flächenkollektors gebildeten Kegel- bzw. Zylinderfläche (4 bzw. 5) umschlossen ist, der insbes. als Doppelmantelboiler ausgebildete Speicherbehälter (8) angeordnet ist.

3. Solaranlage nach Anspruch 1 oder 2, dadurch gekennzeichnet, daß sich die Kegel- bzw. Zylinderfläche (4 bzw. 5) über einen Winkelbereich von 120° erstreckt.

4. Solaranlage nach einem der Ansprüche 1 bis 3, dadurch gekennzeichnet, daß die Rohre (3) aus dem Absorberblech (2) ausgeformt und demgemäß mit dem Absorberblech (2) aus einem Stück bestehen.

FIG.1

FIG.2

FIG.3

FIG.4

FIG.5